# EUROPÄISCHE PATENTSCHRIFT

(11) **EP 3 135 976 B1**
(45) Veröffentlichungstag und Bekanntmachung des Hinweises auf die Patenterteilung: **12.02.2020**
(21) Anmeldenummer: 16171451.4
(22) Anmeldetag: 26.05.2016
(51) Int. Cl.: F16L 33/207

(54) **VERBINDUNGSANORDNUNG FÜR WELLROHRSCHLAUCHLEITUNGEN**
CONNECTION ASSEMBLY FOR CORRUGATED PIPE HOSE LINES
DISPOSITIF DE RACCORDEMENT POUR CONDUITES ONDULEES

(30) Priorität: 26.08.2015 DE 102015216324
(43) Veröffentlichungstag der Anmeldung: 01.03.2017
(73) Patentinhaber: ContiTech Kühner GmbH & Cie. KG, 71570 Oppenweiler (DE)
(72) Erfinder: Eismann, Mike, 71739 Oberriexingen (DE); Wulkow, Jens, 70374 Stuttgart (DE); Hübl, Stefan, 71570 Oppenweiler (DE)
(74) Vertreter: Finger, Karsten

(56) Entgegenhaltungen:
- DE-A1-102007 021 846
- DE-B4-102007 047 495
- DE-T2- 69 613 701
- US-B2- 7 661 720

## Beschreibung

Die Erfindung betrifft eine Verbindungsanordung für Wellrohrschlauchleitungen mit Aluminiumrohren, aufweisend mindestens ein Wellrohr aus Edelstahl, einen Anschlussnippel aus Edelstahl und mindestens einen Rohrabschnitt aus Aluminium, wobei Wellrohr und Nippel stoffschlüssig miteinander verbunden sind und das Wellrohr mit einem Druckträgerschlauch umfasst ist.

Wellrohrschlauchleitungen der genannten Art sind beispielsweise aus DE 10 2007 047 495 B4 bekannt. Sie weisen als Innenseele ein vorzugsweise aus Edelstahl bestehendes Wellrohr auf, dessen beide Enden mit geeigneten Schlussarmaturen druckdicht verbunden sind und das von einem elastomerem Druckträgerschlauch umfasst ist. Im großen Umfang werden sie im Kraftfahrzeugbau als Kältemittelleitungen für die Fahrzeugklimaanlagen eingesetzt.

Die Wellrohrschlauchleitungen werden jedoch dort verwendet, wo eine Flexiblilität der Leitung erforderlich ist. Daher sind Verbindungen zu starren Rohren vorgesehen, wobei die starren Rohrleitungen aus Gründen der Gewichtseinsparung meist aus Aluminium gefertigt sind.

Um die Verbindungen druckdicht und vibrationsfest auszuführen, sind verschiedene Methoden bekannt. So kommen außer den thermischen Verbindungsverfahren wie Schweißen oder Löten auch umformtechnische Lösungen zum Einsatz, bei denen die einzelnen Komponenten der Verbindung durch radiale plastische Verformung von Muffen, Ringen dicht u. unlösbar miteinander verbindbar sind. Das Verfahren der radialen plastischen Verformung wird häufig mit dem Begriff "crimpen" bezeichnet.

Eine derartige Verbindung ist beispielsweise in der US 7,661,720 B2 offenbart. Bei dieser Anordnung sind zunächst grundsätzlich zwei Teilbereiche der Anordnung zu betrachten, nämlich der Wellschlauchteil A und der Rohrteil B.

Im Wellschlauchteil A sind ein erstes Ende eines Anschlussnippels und ein Wellrohr ebenfalls aus Edelstahl miteinander durch einen Lötvorgang fest verbunden. Der Nippel weist an seinem dem Wellrohr abgewandten zweiten Ende eine sägezahnähnliche in Umfangsrichtung umlaufende Schneidkontur auf.

Der Wellschlauchteil A weist einen Druckträgerschlauch auf, der in seiner axialen Ausdehnung, die Lötstelle zwischen Nippel und Wellrohr überdeckend, noch eine Strecke weit über den Nippel ragt, wobei jedoch das vom Wellrohr abgewandte zweite Ende des Nippels frei bleibt. Außen wird der Bereich der Lötnaht von einem ersten Metallring umfasst, der außen um den Druckträgerschlauch herum angeordnet ist und zusammen mit diesem in Richtung des zweiten Nippelendes axial abschließt. Dieser erste Metallring ist in dem Bereich, der sich axial ausschließlich über den Nippel erstreckt, durch einen Crimpvorgang radial zusammengestaucht. Das Material des Druckträgerschlauches ist dabei in zwei Ringnuten des Nippels eingepresst, so dass sich eine dichte, unlösbare Verbindung aus Wellrohr, Nippel, Druckträgerschlauch und erstem Ring ergibt.

Der Rohrteil B weist ein Aluminiumrohr auf, dessen Ende derart aufgeweitet ist, dass es über das mit der Schneidkontur versehene Ende des Nippels mit geringem Spiel aufschiebbar ist. Um die Aufweitung des Rohres herum ist ein zweiter Metallring aufgesteckt, der axial sowohl den aufgeweiteten Teil des Aluminiumrohres überdeckt als auch eine Strecke über das aufgeweitete Ende des Rohres hinaus ragt. Der Innendurchmesser dieses zweiten Ringes korrespondiert mit dem Außendurchmesser mit dem zusammengecrimpten ersten Metallrings des Wellschlauchteils A.

Nachdem Zusammenstecken der Teile A und B der Verbindung ist der zweite Metallring über dem aufgeweiteten Aluminiumrohr ebenfalls zusammen crimpbar. Dadurch, dass das Aluminiumrohr relativ weich ist, ist dessen Durchmesser durch den Crimpvorgang mittelbar durch den zweiten Metallring ebenfalls im Durchmesser reduziert, so dass das Alumaterial des Rohres auf den Nippel des Teils A aufgepresst ist, wobei es in die Schneidkontur des Nippels eingreift.

Nachteilig an dieser Anordnung ist, dass neben den eigentlichen fluidführenden Teilen noch weitere Hilfsbauteile notwendig sind, um eine druckdichte unlösbare Verbindung der fluidführenden Bauteile herzustellen. Außerdem ist die Umformung des Alurohres nur über ein Zwischenteil, nämlich den zweiten Metallring möglich. Das Ergebnis dieser Umformung ist daher auch von den metallurgischen Eigenschaften dieses Rings abhängig.

Der Erfindung lag die Aufgabe zugrunde, eine Verbindungsanordnung der eingangs geschilderten Art zu vereinfachen und die Gefahr von Undichtigkeiten zu reduzieren.

Diese Aufgabe wird dadurch gelöst, dass über eine Vercrimpung der Druckträgerschlauch direkt mit dem Rohrabschnitt eine fluiddichte Verbindung aufweist.

Diese Anordnung hat den Vorteil, dass, der Druckträgerschlauch über die Vercrimpung direkt mit einem Teil des Rohres eine fluiddichte Verbindung aufweist, wodurch die Gefahr von Undichtigkeiten reduziert ist.

In einer Weiterbildung der Erfindung weist der Anschlussnippel einen Haltebereich und einen Dichtbereich auf,
- wobei der Haltebereich ein umlaufendes Halteprofil aufweist, dass abwechselnd aus Profilhöhen und Profiltälern gebildet ist und
- der Dichtbereich mindestens ein Dichtelement aufweist, wobei der Dichtbereich dem vom Wellrohr abgewandten Ende des Nippels zugeordnet ist und der Haltebereich zwischen Dichtbereich und Verbindungsstelle von Nippel und Wellrohr auf dem Nippel angeordnet ist,
- wobei zwischen Dichtbereich und Haltebereich ein Absatz angeordnet ist, der den Haltebereich und den Dichtbereich voneinander abgrenzt,
- der Druckträgerschlauch über die Verbindungsstelle von Wellrohr und Nippel hinaus axial bis über den Haltebereich des Nippels reicht und den Haltebereich im Wesentlichen vollständig axial überdeckt,
- das Rohr an seinem Ende zweistufig aufgeweitet ist, wobei die erste Stufe, vom Ende beabstandet, über den Nippel passt und die zweite Stufe, der Endabschnitt, weiter ist als die erste Stufe,
- die zweite Stufe einen Durchmesser aufweist, der auf das das Halteprofil überdeckende Ende des Druckträgerschlauches mit geringem radialen Spiel aufschiebbar ist,
- zwischen der ersten Stufe und der zweiten Stufe ein Absatz ausgebildet ist, der gegen den Absatz zwischen Haltbereich und Dichtbereich des Nippels angeschlagen ist,
- die zweite Stufe der Aufweitung des Alurohres gecrimpt ist, sodass das das Halteprofil des Nippels überdeckende Ende des Druckträgerschlauches komprimiert ist und der Druckträgerschlauch im Bereich des Halteprofil des Nippels in dieses hineingepresst ist, wobei die zweite Stufe des aufgeweiteten Aluminiumrohres und der Druckträgerschlauch sowie der Druckträgerschlauch und der Nippel eine form- und reibschlüssige feste Verbindung aufweisen,
- die erste Stufe der Aufweitung des Aluminiumrohres gecrimpt ist, sodass das Material des Aluminiumrohres in diesem Bereich auf den Dichtbereich und das mindestens eine umlaufende Dichtelement des Nippels gepresst ist, wobei Aluminiumrohr und Nippel in diesem Bereich eine fluiddichte form- und reibschlüssige Verbindung aufweisen.

Diese Anordnung hat den Vorteil, dass durch den Wegfall zweier Crimpringe vier Arbeitsgängen entfallen, d.h. jeweils einmal aufstecken und vercrimpen und dadurch nicht nur die Montage stark vereinfacht wird, sondern auch eine nochmals erhöhte Sicherheit gegen Undichtigkeiten gegeben ist.

In einer Weiterbildung der Erfindung ist das mindestens eine Dichtelement als umlaufende elastische Dichtung ausgebildet, die in Form einer O-Ring-Dichtung in eine umlaufende Nut im Dichtbereich des Nippels einlegbar ist.

Auf diese Weise lässt sich eine sehr gute Dichtwirkung erzielen, ohne dass die Schneidwirkung eines Schneidprofiles ggfs. die Festigkeit des Aluminiumrohres beeinträchtigt. Außerdem ist die Vibrationsempfindlichkeit der Abdichtung durch eine derartige elastische Dichtung deutlich geringer.

In einer Weiterbildung der Erfindung ist das mindestens eine Dichtelement im Dichtbereich des Nippels als umlaufendes Schneidprofil ausgebildet, wobei das Schneidprofil mindestens einen aus der Oberfläche des Dichtbereiches radial herausragenden scharfkantigen umlaufenden Wulst aufweist.

Auf diese Weise ist die Dichtwirkung durch das Einschneiden des Dichtprofils in das Aluminiummaterial des Rohres bei der Vercrimpung der ersten Stufe der Aufweitung des Aluminiumrohres ergänzt durch einen Formschluss zwischen Rohr und Nippel, der die axiale Zugfestigkeit der Verbindung verbessert.

In einer Weiterbildung der Erfindung weist der Dichtbereich des Nippels als Dichtelement mindestens ein umlaufendes Schneidprofil und außerdem mindestens eine umlaufende elastische Dichtung in Form einer O-Ring-Dichtung auf.

Auf diese Weise sind die Vorteile der hohen axialen Zugfestigkeit mit dem Vorteil der besonderen Dichtheit kombinierbar.

Anhand der Zeichnung wird nachstehend ein Beispiel der Erfindung näher erläutert.

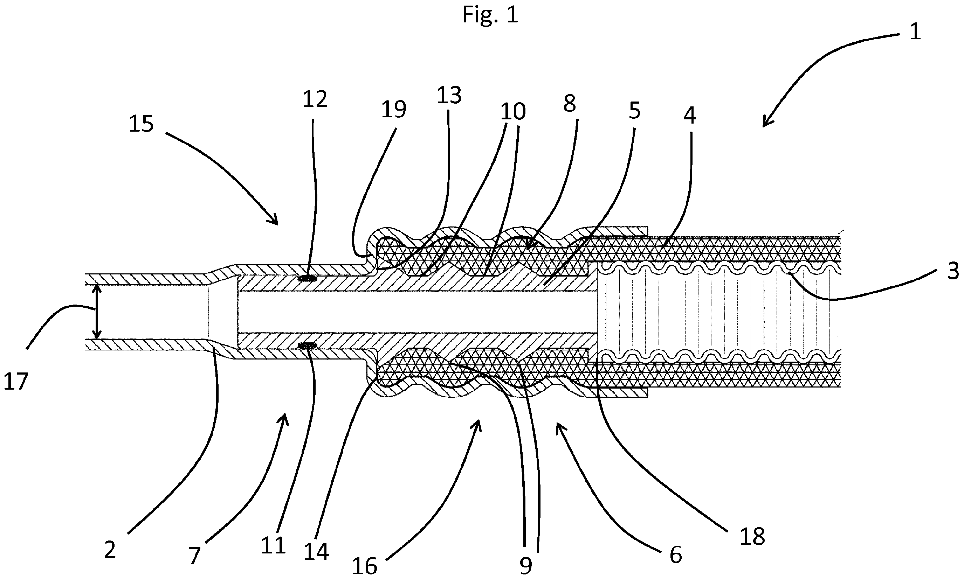

Die Fig. 1 zeigt eine erfindungsgemäße Verbindungsanordnung 1 in einem Längsschnitt. Die Anordnung 1 weist ein Aluminiumrohr 2 auf, von dem hier nur ein Endabschnitt gezeigt ist. Die Anordnung weist weiterhin ein Wellrohr 3 auf, wobei das Wellrohr 3 mit einem Druckträgerschlauch 4 aus einem elastomeren Material umfasst ist. Mit dem Wellrohr 3 fest verbunden ist ein Anschlussnippel 5. Das Wellrohr 3 und der Nippel 5 bestehen aus Edelstahl.

Wellrohr 3 und Druckträgerschlauch 4 sind hier ebenfalls nur in einem Endabschnitt gezeigt. Der Nippel 5 weist einen ersten Bereich 6 und einen zweiten Bereich 7 auf, wobei der erste Bereich 6 dem Wellrohr 3 zugeordnet ist und ein umlaufendes Profil 8 aufweist, welches aus Profilhöhe 9 und Profiltälern 10 aufgebaut ist, die sich abwechselnd axial aneinander reihen. Der an dem ersten Bereich 6 in Richtung vom Wellrohr 3 weg sich anschließend zweite Bereich 7 des Nippels 5 weist keine Profilierung auf. Etwa mittig im Bereich 7 ist eine umlaufende Nut 11 angeordnet, in die eine elastische Ringdichtung 12 eingebettet ist. Am Übergang von Bereich 6 in den Bereich 7 des Nippels ist ein Absatz 13 angeordnet.

Der Druckträgerschlauch 4 ist axial derart auf den Verbund aus Wellrohr 3 und Nippel 5 aufgeschoben, dass der Druckträgerschlauch 4 das Profil 8 des Bereiches 6 des Nippels vollständig überdeckt und das Ende 14 des Druckträgerschlauches 4 mit dem Absatz 13 des Nippels 5 korrespondiert.

Das Aluminiumrohr 2 weist zwei Abschnitte 15 und 16 auf, die gegenüber dem restlichen Durchmesser 17 des Rohres 2 unterschiedlich aufgeweitet sind. Der Abschnitt 16 ist derart aufgeweitet, dass er bei der Montage der Anordnung 1 radial über den Druckträgerschlauch 4 schiebbar ist, wobei der Abschnitt 16 axial mindestens bis an die Verbindungsstelle 18 des Verbundes aus Nippel 5 und Wellrohr 3 reicht. Der Abschnitt 15 des Rohres 2 ist derart aufgeweitet, dass er radial auf den Bereich 7 des Nippels 5 unter Überdeckung der Ringdichtung 12 aufschiebbar ist.

Im Übergang des Abschnitts 15 in den Abschnitt 16 des Rohres 2 ist ein Absatz 19 angeordnet.

Zur Verbindung von Rohr 2 mit dem Nippel 5 ist das Rohr 2 auf den Verbund aus Nippel 5, Wellrohr 3 und Druckträgerschlauch 4 derart aufgeschoben, dass der Absatz 19 des Rohres 2 gegen den Absatz 13 des Nippels anschlagend zu liegen kommt. Der Abschnitt 16 des Rohres 2 weist eine Crimpung auf, durch die der Druckträgerschlauch 4 im Bereich des Profiles 8 des Nippels 5 radial zusammengepresst ist. Der Druckträgerschlauch 4 ist dadurch in das Profil 8 des Nippels 6 eingepresst.

Der Abschnitt 15 des Rohres 2 weist ebenfalls eine Crimpung auf, wodurch der Abschnitt 15 auf den Bereich 7 des Nippels aufgepresst und der Dichtring 12 zusammengedrückt ist.

Durch die Vercrimpung und die damit verbundene plastische Verformung des Rohres 2 sind Rohr 2 und der Druckträgerschlauch 4 form- und reibschlüssig miteinander verbunden. Da der Druckträgerschlauch 4 außerdem in das Profil 8 des Nippels gepresst ist und dadurch zwischen Nippel 5 und Druckträgerschlauch 4 ebenfalls eine form- und reibschlüssige Verbindung besteht, sind alle druckführenden Teile der Anordnung 1 fest und druckdicht miteinander verbunden.

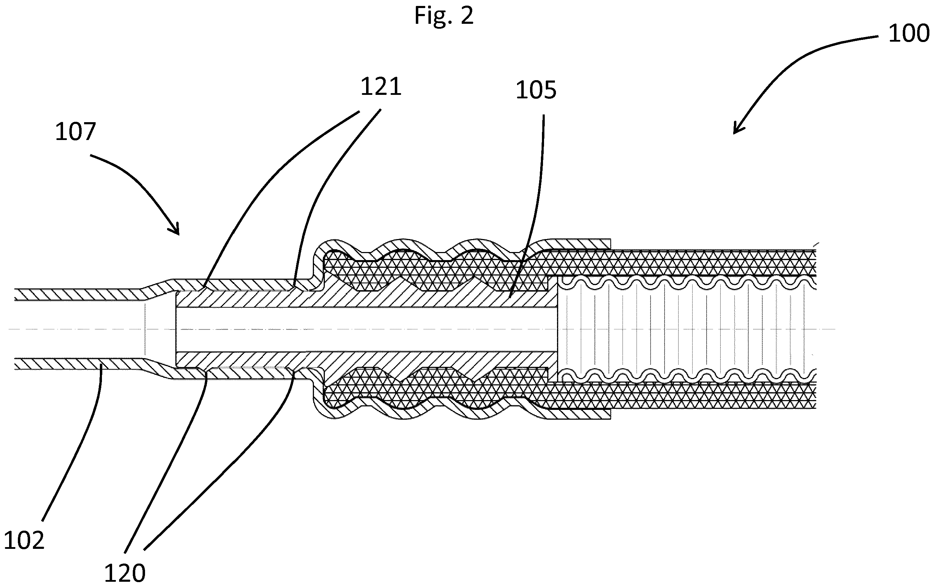

Die Fig. 2 zeigt eine weitere erfindungsgemäße Anordnung 100, die zu der Anordnung der Fig. 1 ähnlich ist. Im Unterschied zur Anordnung 1 weist die Anordnung 100 einen Nippel 105 auf, der in einem Abschnitt 107 eine Profilierung 120 aufweist. Die Profilierung 120 ist aus zwei umlaufenden, scharfkantigen, aus den umgebenden Materialien des Abschnittes 107 radial herausragenden Wülsten 121 aufgebaut.

Die Wülste 121 greifen in das Material des Bereichs 15 des um den Abschnitt 7 herum vercrimpten Rohres 2 ein, so dass hier gegenüber der Anordnung 1 aus Fig. 1 eine formschlüssige Verbindung auch direkt zwischen dem Rohr 2 und dem Nippel 105 besteht.

Dadurch ist sowohl die Dichtheit als auch die axiale Zugfestigkeit der Anordnung weiter verbessert.

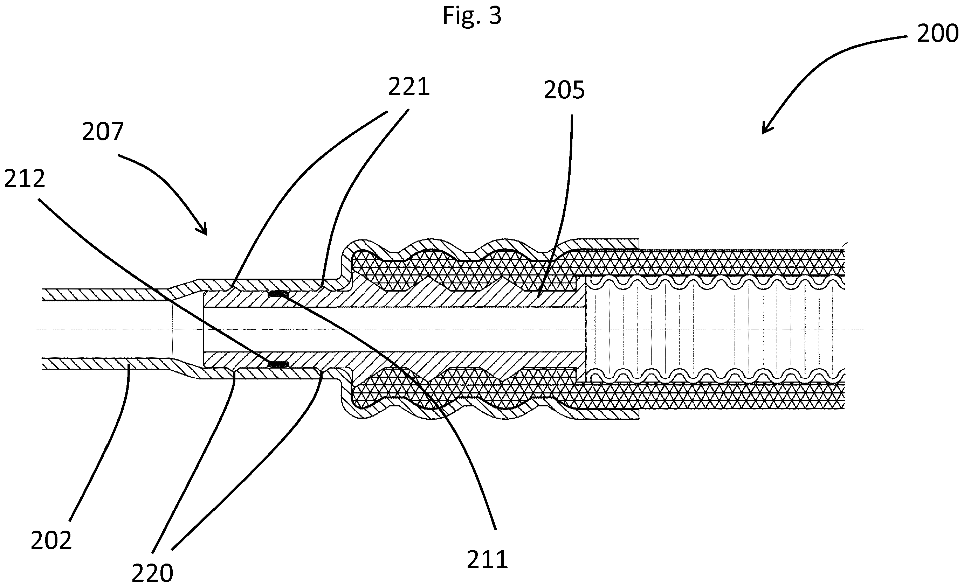

In der Fig. 3 ist eine Verbindungsanordnung 200 gezeigt, die zu der Anordnung 100 aus Fig. 2 ähnlich ist. Die Anordnung 200 weist einen Nippel 205 auf, der im Unterschied zum Nippel 105 aus Fig. 2 in einem Abschnitt 207 etwa mittig zusätzlich zur Profilierung 220, 221 eine umlaufende Nut 211 aufweist, in die ein umlaufender, O-Ring-förmiger elastischer Dichtring 212 eingebettet ist. Dieser Dichtring 212 verbessert die Dichtigkeit zwischen dem Nippel 205 und dem fertig vercrimpten Rohr 2 nochmals.

### Bezugszeichenliste

### (Teil der Beschreibung)

- 1, 100, 200: Verbindungsanordnung
- 2: Aluminiumrohr, Alurohr, Rohrabschnitt
- 3: Wellrohr
- 4: Druckträgerschlauch
- 5, 105, 205: Anschlussnippel, Nippel
- 6: erster Bereich, Haltebereich des Nippels
- 7, 107, 207: zweiter Bereich, Dichtbereich des Nippels
- 8: Halteprofil
- 9: Profilhöhen
- 10: Profiltäler
- 11, 211: umlaufende Nut des Bereichs 7
- 12, 212: elastische Ringdichtung
- 13: Absatz
- 14: Ende des Druckträgerschlauches 4
- 15, 16: Bereiche des Rohres 2
- 17: Durchmesser des Rohres 2
- 18: Verbindungsstelle zwischen Nippel 5 und Wellrohr 3
- 19: Absatz im Übergang zwischen den Bereichen 15 und 16
- 120, 220: Profilierung des Bereichs 107
- 121, 221: Wülste des Bereichs 107

## Patentansprüche

1. Verbindungsanordnung (1, 100, 200) für Wellrohrschlauchleitungen mit Aluminiumrohren (2), aufweisend mindestens ein Wellrohr (3) aus Edelstahl, einen Anschlussnippel (5, 105, 205) aus Edelstahl und mindestens einen Rohrabschnitt (2) aus Aluminium, wobei Wellrohr (3) und Anschlussnippel (5, 105, 205) stoffschlüssig miteinander verbunden sind und das Wellrohr (3) mit einem Druckträgerschlauch (4) umfasst ist, **dadurch gekennzeichnet, dass** über eine Vercrimpung der Druckträgerschlauch (4) direkt mit dem Rohrabschnitt (2) eine fluiddichte Verbindung aufweist.

2. Verbindungsanordnung (1, 100, 200) nach Anspruch 1, **dadurch gekennzeichnet, dass**
- der Anschlussnippel (5, 105, 205) einen Haltebereich (6) und einen Dichtbereich (7, 107, 207) aufweist,
- wobei der Haltebereich (6) ein umlaufendes Halteprofil (8) aufweist, dass abwechselnd aus Profilhöhen (9) und Profiltälern (10) gebildet ist und
- der Dichtbereich (7, 107, 207) mindestens ein Dichtelement (12, 120, 121, 212, 220, 221) aufweist, wobei der Dichtbereich (7, 107, 207) dem vom Wellrohr (3) abgewandten Ende des Anschlussnippels (5, 105, 205) zugeordnet ist und der Haltebereich (6) zwischen Dichtbereich (7, 107, 207) und Verbindungsstelle (18) von Anschlussnippel (5, 105, 205) und Wellrohr (3) auf dem Anschlussnippel (5, 105, 205) angeordnet ist,
- wobei zwischen Dichtbereich (7, 107, 207) und Haltebereich (6) ein erster Absatz (13) angeordnet ist, der den Haltebereich (6) und den Dichtbereich (7, 107, 207) voneinander abgrenzt,
- der Druckträgerschlauch (4) über die Verbindungsstelle (18) von Wellrohr (3) und Anschlussnippel (5, 105, 205) hinaus axial bis über den Haltebereich (6) des Anschlussnippels (5, 105, 205 reicht und den Haltebereich (6) im Wesentlichen vollständig axial überdeckt,
- das Rohrabschnitt (2) an seinem Ende zweistufig aufgeweitet ist, wobei die erste Stufe (15), vom Ende beabstandet, über den Anschlussnippel (5, 105, 205) passt und die zweite Stufe (16), der Endabschnitt, weiter ist als die erste Stufe (15),
- die zweite Stufe (16) einen Durchmesser aufweist, der auf das das Halteprofil (8) überdeckende Ende (14) des Druckträgerschlauches (4) mit geringem radialen Spiel aufschiebbar ist,
- zwischen der ersten Stufe (15) und der zweiten Stufe (16) ein zweiter Absatz (19) ausgebildet ist, der gegen den ersten Absatz (13) zwischen Haltbereich (6) und Dichtbereich (7, 107, 207) des Anschlussnippels (5, 105, 205) angeschlagen ist,
- die zweite Stufe (16) der Aufweitung des Rohrabschnitts (2) gecrimpt ist, sodass das das Halteprofil (8) des Anschlussnippels (5, 105, 205) überdeckende Ende (14) des Druckträgerschlauches (4) komprimiert ist und der Druckträgerschlauch (4) im Bereich des Halteprofils (8) des Anschlussnippels 105, 205) in dieses hineingepresst ist, wobei die zweite Stufe (16) des aufgeweiteten Rohrabschnitts (2) und der Druckträgerschlauch (4) sowie der Druckträgerschlauch (4) und der Anschlussnippel (5, 105, 205) eine form- und reibschlüssige feste Verbindung aufweisen,
- die erste Stufe der Aufweitung (15) des Rohrabschnitts (2) gecrimpt ist, sodass das Material des Rohrabschnitts (2) in diesem Bereich auf den Dichtbereich (7, 107, 207) und das mindestens eine umlaufende Dichtelement (12, 120, 121, 212, 220, 221) des Anschlussnippels (5, 105, 205) gepresst ist, wobei Rohrabschnitt (2) und Anschlussnippel (5, 105, 205) in diesem Bereich eine fluiddichte form- und reibschlüssige Verbindung aufweisen.

3. Verbindungsanordnung (1, 100, 200) nach Anspruch 2, **dadurch gekennzeichnet, dass** das mindestens eine Dichtelement (12, 120, 121, 212, 220, 221) als umlaufende elastische Dichtung (12) ausgebildet ist, die in Form einer O-Ring-Dichtung in eine umlaufende Nut im Dichtbereich (7) des Nippels (5) einlegbar ist.

4. Verbindungsanordnung (1, 100, 200) nach Anspruch 2, **dadurch gekennzeichnet, dass** das mindestens eine Dichtelement (12, 120, 121, 212, 220, 221) im Dichtbereich (107) des Nippels (105) als umlaufendes Schneidprofil (120, 121) ausgebildet ist, wobei das Schneidprofil (120, 121) mindestens einen aus der Oberfläche des Dichtbereiches (107) radial herausragenden scharfkantigen umlaufenden Wulst (121) aufweist.

5. Verbindungsanordnung (1, 100, 200) nach Anspruch 2, **dadurch gekennzeichnet, dass** das mindestens eine Dichtelement (12, 120, 121, 212, 220, 221) im Dichtbereich (207) des Nippels (205) als mindestens ein umlaufendes Schneidprofil (220, 221) und außerdem mindestens eine umlaufende elastische Dichtung (212) in Form einer O-Ring-Dichtung (212) aufweist.

## Claims

1. Connecting arrangement (1, 100, 200) for corrugated tube lines with aluminium tubes (2), having at least one corrugated tube (3) made from stainless steel, a connector nipple (5, 105, 205) made from stainless steel, and at least one tube section (2) made from aluminium, the corrugated tube (3) and the connector nipple (5, 105, 205) being connected to one another in an integrally joined manner, and the corrugated tube (3) being enclosed by way of a pressure carrier hose (4), **characterized in that** the pressure carrier hose (4) has a fluid-tight connection via a crimped connection directly to the tube section (2).

2. Connecting arrangement (1, 100, 200) according to Claim 1, **characterized in that**
- the connector nipple (5, 105, 205) has a holding region (6) and a sealing region (7, 107, 207),
- the holding region (6) having a circumferential holding profile (8) which is formed in an alternating manner from profile peaks (9) and profile troughs (10), and
- the sealing region (7, 107, 207) having at least one sealing element (12, 120, 121, 212, 220, 221), the sealing region (7, 107, 207) being assigned to that end of the connector nipple (5, 105, 205) which faces away from the corrugated tube (3), and the holding region (6) being arranged on the connector nipple (5, 105, 205) between the sealing region (7, 107, 207) and the connecting point (18) of the connector nipple (5, 105, 205) and the corrugated tube (3),
- a first shoulder (13) being arranged between the sealing region (7, 107, 207) and the holding region (6), which first shoulder (13) delimits the holding region (6) and the sealing region (7, 107, 207) from one another,
- the pressure carrier hose (4) reaching axially beyond the connecting point (18) of the corrugated tube (3) and the connector nipple (5, 105, 205) as far as beyond the holding region (6) of the connector nipple (5, 105, 205), and axially covering the holding region (6) substantially completely,
- the tube section (2) being widened in two steps at its end, the first step (15) fitting over the connector nipple (5, 105, 205) in a manner which is spaced apart from the end, and the second step (16) (the end section) being wider than the first step (15),
- the second step (16) having a diameter which can be pushed with a small radial play onto that end (14) of the pressure carrier hose (4) which covers the holding profile (8),
- a second shoulder (19) being configured between the first step (15) and the second step (16), which second shoulder (19) bears against the first shoulder (13) between the holding region (6) and the sealing region (7, 107, 207) of the connector nipple (5, 105, 205),
- the second step (16) of the widened portion of the tube section (2) being crimped, with the result that that end (14) of the pressure carrier hose (4) which covers the holding profile (8) of the connector nipple (5, 105, 205) is compressed, and the pressure carrier hose (4) is pressed into said end in the region of the holding profile (8) of the connector nipple (5, 105, 205), the second step (16) of the widened tube section (2) and the pressure carrier hose (4), and the pressure carrier base (4) and the connector nipple (5, 105, 205) having a positively locking and frictionally locking fixed connection,
- the first step of the widened portion (15) of the tube section (2) being crimped, with the result that the material of the tube section (2) is pressed in this region onto the sealing region (7, 107, 207) and the at least one circumferential sealing element (12, 120, 121, 212, 220, 221) of the connector nipple (5, 105, 205), the tube section (2) and the connector nipple (5, 105, 205) having a fluid-tight positively locking and frictionally locking connection in this region.

3. Connecting arrangement (1, 100, 200) according to Claim 2, **characterized in that** the at least one sealing element (12, 120, 121, 212, 220, 221) is configured as a circumferential elastic seal (12) which can be inserted in the form of an O-ring seal into a circumferential groove in the sealing region (7) of the nipple (5).

4. Connecting arrangement (1, 100, 200) according to Claim 2, **characterized in that** the at least one sealing element (12, 120, 121, 212, 220, 221) is configured as a circumferential cutting profile (120, 121) in the sealing region (107) of the nipple (105), the cutting profile (120, 121) having at least one sharp-edged circumferential bead (121) which protrudes radially out of the surface of the sealing region (107).

5. Connecting arrangement (1, 100, 200) according to Claim 2, **characterized in that** the at least one sealing element (12, 120, 121, 212, 220, 221) has as at least one circumferential cutting profile (220, 221) in the sealing region (207) of the nipple (205) and, moreover, has at least one circumferential elastic seal (212) in the form of an O-ring seal (212).

## Revendications

1. Dispositif de raccordement (1, 100, 200) pour conduites tubulaires ondulées souples comportant des tubes en aluminium (2), comprenant au moins un tube ondulé (3) en acier fin, un mamelon de raccordement (5, 105, 205) en acier fin et au moins une partie tubulaire (2) en aluminium, le tube ondulé (3) et le mamelon de raccordement (5, 105, 205) étant reliés l'un à l'autre par liaison de matière et le tube ondulé (3) étant entouré par un tuyau souple (4) résistant à la pression,
**caractérisé en ce que** par le biais d'un sertissage, le tuyau souple (4) résistant à la pression présente une liaison étanche aux fluides directement avec la partie tubulaire (2).

2. Dispositif de raccordement (1, 100, 200) selon la revendication 1, **caractérisé en ce que**
- le mamelon de raccordement (5, 105, 205) comprend une région de retenue (6) et une région d'étanchéité (7, 107, 207),
- la région de retenue (6) présentant un profil de retenue périphérique (8) qui est formé en alternance à partir de crêtes de profil (9) et de creux de profil (10) et
- la région d'étanchéité (7, 107, 207) comprend au moins un élément d'étanchéité (12, 120, 121, 212, 220, 221), la région d'étanchéité (7, 107, 207) étant associée à l'extrémité du mamelon de raccordement (5, 105, 205) opposée au tube ondulé (3) et la région de retenue (6) étant disposée sur le mamelon de raccordement (5, 105, 205) entre la région d'étanchéité (7, 107, 207) et le point de liaison (18) du mamelon de raccordement (5, 105, 205) et du tube ondulé (3),
- un premier épaulement (13) étant disposé entre la région d'étanchéité (7, 107, 207) et la région de retenue (6), lequel isole la région de retenue (6) et la région d'étanchéité (7, 107, 207) l'une de l'autre,
- le tuyau souple (4) résistant à la pression dépasse axialement au-delà du point de liaison (18) du tube ondulé (3) et du mamelon de raccordement (5, 105, 205) jusqu'au-delà de la région de retenue (6) du mamelon de raccordement (5, 105, 205) et recouvre la région de retenue (6) axialement sensiblement complètement,
- la partie tubulaire (2) est élargie en deux étages à son extrémité, le premier étage (15) s'adaptant sur le mamelon de raccordement (5, 105, 205), de manière espacée de l'extrémité, et le deuxième étage (16), c'est-à-dire la partie d'extrémité, étant plus large que le premier étage (15),
- le deuxième étage (16) présente un diamètre qui peut être enfilé avec un jeu radial faible sur l'extrémité (14) du tuyau souple (4) résistant à la pression recouvrant le profil de retenue (8),
- un deuxième épaulement (19) est formé entre le premier étage (15) et le deuxième étage (16), lequel deuxième épaulement est en butée contre le premier épaulement (13) entre la région de retenue (6) et la région d'étanchéité (7, 107, 207) du mamelon de raccordement (5, 105, 205),
- le deuxième étage (16) de l'élargissement de la partie tubulaire (2) est serti de telle sorte que l'extrémité (14) du tuyau souple (4) résistant à la pression recouvrant le profil de retenue (8) du mamelon de raccordement (5, 105, 205) est comprimée et le tuyau souple (4) résistant à la pression est, dans la région du profilé de retenue (8) du mamelon de raccordement (5, 105, 205), enfoncé dans celui-ci, le deuxième étage (16) de la partie tubulaire élargie (2) et le tuyau souple (4) résistant à la pression ainsi que le tuyau souple (4) résistant à la pression et le mamelon de raccordement (5, 105, 205) présentant une liaison solide par complémentarité de forme et par friction,
- le premier étage de l'élargissement (15) de la partie tubulaire (2) est serti, de telle sorte que la matière de la partie tubulaire (2) est pressée dans cette région sur la région d'étanchéité (7, 107, 207) et ledit au moins un élément d'étanchéité périphérique (12, 120, 121, 212, 220, 221) du mamelon de raccordement (5, 105, 205),
la partie tubulaire (2) et le mamelon de raccordement (5, 105, 205) présentant dans cette région une liaison par complémentarité de forme et par friction étanche aux fluides.

3. Dispositif de raccordement (1, 100, 200) selon la revendication 2, **caractérisé en ce que** ledit au moins un élément d'étanchéité (12, 120, 121, 212, 220, 221) est réalisé en tant que joint d'étanchéité élastique périphérique (12) qui peut être inséré sous la forme d'un joint d'étanchéité torique dans une rainure périphérique dans la région d'étanchéité (7) du mamelon (5).

4. Dispositif de raccordement (1, 100, 200) selon la revendication 2, **caractérisé en ce que** ledit au moins un élément d'étanchéité (12, 120, 121, 212, 220, 221) est, dans la région d'étanchéité (107) du mamelon (105), réalisé en tant que profil de coupe périphérique (120, 121), le profil de coupe (120, 121) comprenant au moins un bourrelet (121) périphérique à arêtes vives faisant saillie radialement à partir de la surface de la région d'étanchéité (107).

5. Dispositif de raccordement (1, 100, 200) selon la revendication 2, **caractérisé en ce que** ledit au moins un élément d'étanchéité (12, 120, 121, 212, 220, 221) comprend en tant qu'au moins un profil de coupe périphérique (220, 221) dans la région d'étanchéité (207) du mamelon (205) et en outre au moins un joint d'étanchéité élastique périphérique (212) sous la forme d'un joint d'étanchéité torique (212).
